# EUROPEAN PATENT APPLICATION

(11) **EP 2 277 835 A1**
(43) Date of publication of application: **26.01.2011**
(21) Application number: 10188400.5
(22) Date of filing: 09.10.2007
(51) Int. Cl.: C03B 17/06

(54) **A process for producing a glass ribbon**

(30) Priority: 24.10.2006 JP 2006289117
(62) Divisional of application: 07829444.4
(71) Applicant: Nippon Electric Glass Co., Ltd., Otsu-shi Shiga 520-8639 (JP)
(72) Inventor: Tomamoto, Masahiro, Shiga 5208639 (JP); Oda, Hidetaka, Shiga 5208639 (JP)
(74) Representative: Tetzner, Michael

(57) **Abstract**

A process for producing a glass ribbon by feeding molten glass to a forming member and causing the molten glass to flow downward from the forming member to form a sheet-like glass ribbon, comprising
temporarily cooling the glass ribbon while being caused to flow downward from the forming member, whereby the glass ribbon does not substantially vary in thickness, and afterwards
a reheating step of reheating and softening the glass ribbon to further reduce the thickness of the glass ribbon.

## Description

### Technical Field

The present invention relates to a process for producing a glass ribbon, in particular, an improvement in a technique for producing a glass ribbon by what is called a down-draw process in which molten glass is caused to flow downward from a forming member to form the glass ribbon.

### Background Art

As has been well known, when a sheet glass is produced, there has been known what is called a down-draw process in which molten glass is caused to flow downward from a forming member to form a glass ribbon serving as a raw glass sheet. Examples of a process representing the down-draw process include an overflow down-draw process (fusion process) and a slot down-draw process. The former overflow down-draw process is a process in which, by causing molten glass continuously fed to a forming member having a wedge-like cross-sectional configuration to flow downward from a top portion of the forming member along both side surfaces thereof, the molten glass is fused at a lower end portion of the forming member to be formed into a configuration of a single sheet, and a sheet-like glass ribbon having the configuration is caused to flow downward from the lower end portion of the forming member to finally form a solidified glass ribbon. On the other hand, the latter slot down-draw process is a process in which molten glass continuously fed to a forming member is caused to flow downward from a slit in the shape of a oblong hole formed at a bottom portion of the forming member to be formed into a sheet-like configuration, a glass ribbon having the sheet-like configuration is caused to flow downward along a transport route, and then a solidified glass ribbon is finally formed. By separating the glass ribbon formed by those processes into a predetermined size, the sheet glass is obtained from the glass ribbon.

In the down-draw process of this type, in order to form a glass ribbon with high quality and high grade, various measures have been actually taken in recent years. For example, in Patent Document 1 described below, it is proposed to take measures described below in order to solve a problem that both widthwise end portions of a glass ribbon formed by the down-draw process tend to be thicker than a widthwise middle portion, and a distortion resulting from a difference in cooling rates caused by the difference in sheet thicknesses occurs to the glass ribbon. That is, it is disclosed that, in a annealer for annealing the glass ribbon caused to flow downward from a forming member, heat treatment portion is disposed at a widthwise middle portion of the glass ribbon so as to be spaced apart by a predetermined distance from the surface of the glass ribbon, the cooling rate of the widthwise middle portion of the glass ribbon is reduced by the heat treatment portion, and the glass ribbon is annealed while variations in the widthwise temperature of the glass ribbon are suppressed. In addition, the document also discloses that the glass ribbon is annealed using a heater disposed immediately below the forming member so as to prevent the widthwise contraction of the glass ribbon immediate after being caused to flow downward from the forming member due to the rapid cooling of the glass ribbon.
Patent Document 1: JP 2001-31435 A

### Disclosure of the Invention

### Problem to be solved by the Invention

Incidentally, in the down-draw process, when a reduction in the sheet thickness of the glass ribbon is required, it is customary to cope with the requirement by increasing a flow speed of the glass ribbon. That is, it is customary to respond to the above-mentioned requirement for the reduction in sheet thickness by extending the glass ribbon caused to flow down from the forming member downward as quickly as possible.

However, the glass ribbon formed by the down-draw process is gradually solidified as it is caused to flow down from the forming member and moves downward and, during this period, a region in which the sheet thickness of the glass ribbon can be substantially reduced is only a limited region immediately below the forming member in which the glass ribbon is in a softened state. In other words, although the sheet thickness of the glass ribbon past the region described above is locally slightly changed when heat treatment such as annealing is performed on the glass ribbon, substantially, it is not changed anymore. Therefore, once the glass ribbon is cooled (solidified) to a certain degree, the sheet thickness of the glass ribbon cannot be reduced thereafter. Consequently, even when the flow speed of the glass ribbon is increased, there is a limitation in an attempt to reduce the sheet thickness of the glass ribbon. In particular, it is extremely difficult to form a glass ribbon with a sheet thickness of 0.5 mm or less by this process.

In addition, when the flow speed of the glass ribbon is excessively increased, because the flow speed of the glass ribbon in an unsolidified state in which the configuration thereof is not stabilized is inappropriately increased, the process step of forming the glass ribbon is liable to be unstable, and variations in the sheet thickness of the solidified glass ribbon are liable to occur as the result. Moreover, it is necessary to hold the glass ribbon between pulling portion such as rollers and strongly pull out the glass ribbon downward by the pulling portion such as rollers in order to increase the flow speed of the glass ribbon, and hence a critical problem that damage such as a surface flaw or a crack occurs to the glass ribbon may occur.

Consequently, even when the flow speed of the glass ribbon is increased, it is substantially impossible to stably form a glass ribbon with a thin sheet thickness, in particular, a glass ribbon with a sheet thickness 0.5 mm or less.

Patent Document 1 described above discloses that the heat treatment portion is disposed at the widthwise middle portion of the glass ribbon when the glass ribbon is annealed. However, such heat treatment portion is used for reducing the cooling rate of the widthwise middle portion of the glass ribbon when the forming member is annealed, and hence the sheet thickness of the glass ribbon is not substantially reduced by the annealing of the heat treatment portion. Additionally, the document discloses that the heater is disposed immediately below the forming member. However, such a heater is used for preventing rapid cooling of the glass ribbon so as to suppress the widthwise contraction of the glass ribbon, and hence the sheet thickness of the glass ribbon is not substantially reduced by the annealing of the heater.

In view of the foregoing circumstances, a technical object of the present invention is to properly reduce a sheet thickness of a glass ribbon without inappropriately increasing a flow speed of the glass ribbon.

### Means for solving the Problems

According to the present invention, as a first apparatus invented in order to achieve the above-mention object, there is provided a glass ribbon producing apparatus which feeds molten glass to a forming member and causes the molten glass to flow downward from the forming member to form a sheet-like glass ribbon, including reheating portion provided on a transport route for the glass ribbon caused to flow downward from the forming member, in which the reheating portion is constructed to reheat the glass ribbon to cause a sheet thickness of the glass ribbon below the reheating portion to be smaller than the sheet thickness of the glass ribbon above the reheating portion.

In the glass ribbon producing apparatus, a temperature of the glass ribbon is lowered as the glass ribbon flows downward. The temperature of the glass ribbon is normally lowered according to a planned schedule with strict control by temperature controlling portion (heater or the like), and hence the temperature of the glass ribbon is not increased while the glass ribbon is flowing downward. In contrast, in the present invention, the glass ribbon is reheated while the glass ribbon is flowing downward such that the sheet thickness of the glass ribbon is further reduced. The wording "reheated" used herein means re-increasing the temperature of the glass ribbon to reduce the viscosity thereof. In accordance with the producing apparatus as described above, because the sheet thickness of the glass ribbon below reheating portion is caused to be smaller than that of the glass ribbon above the reheating portion by reheating the glass ribbon caused to flow downward from the forming member using the reheating portion, a reduction in the sheet thickness of the glass ribbon can be properly achieved. In other words, after the sheet thickness of the glass ribbon is reduced at a position immediately below the forming member to a certain degree, the sheet thickness of the glass ribbon can be further reduced using the reheating portion. Accordingly, the sheet thickness of the glass ribbon can be reduced in stages at the position immediately below the forming member and at the position immediately below the reheating portion, and hence the reduction in the sheet thickness of the glass ribbon can be properly achieved without inappropriately increasing the flow speed of the glass ribbon.

Further, according to the present invention, as a second apparatus invented in order to achieve the above-mention object, there is provided a glass ribbon producing apparatus which feeds molten glass to a forming member and causes the molten glass to flow downward from the forming member to form a sheet-like glass ribbon, including reheating portion for reheating and softening the glass ribbon which is temporarily cooled while being caused to flow downward from the forming member.

In the glass ribbon producing apparatus, as described above, the temperature of the glass ribbon is lowered as the glass ribbon flows downward, and the temperature of the glass ribbon is not increased while the glass ribbon is flowing downward. In contrast, in the present invention, a temporarily cooled glass ribbon is reheated while the glass ribbon is flowing downward. The wording "temporarily cooled" used herein means being brought into a state where the temperature of the glass ribbon is lowered and the viscosity thereof is increased so that it becomes difficult to further reduce the sheet thickness. The wording "reheated" means re-increasing the temperature of the glass ribbon to reduce the viscosity thereof. In accordance with the producing apparatus as described above, the temporarily cooled glass ribbon while it is being caused to flow downward from the forming member is reheated by the reheating portion to be brought into a softened state, and re-extended downward. That is, the reheating of the reheating portion allows a further reduction in the sheet thickness of the cooled glass ribbon. The cooled glass ribbon before being reheated by the reheating portion is made thin to a certain degree at the position immediately below the forming member. Accordingly, the sheet thickness of the glass ribbon can be reduced in stages at the position immediately below the forming member and at the position immediately below the reheating portion, and hence the reduction in the sheet thickness of the glass ribbon can be properly achieved without inappropriately increasing the flow speed of the glass ribbon.

Further, according to the present invention, as a third apparatus invented in order to achieve the above-mention object, there is provided a glass ribbon producing apparatus which feeds molten glass to a forming member and causes the molten glass to flow downward from the forming member to form a sheet-like glass ribbon, including: controlling portion provided immediately below the forming member, for controlling a widthwise contraction of the glass ribbon; and reheating portion provided immediately below the controlling portion, for reheating and softening the glass ribbon in which the widthwise contraction is controlled by the controlling portion.

In the glass ribbon producing apparatus, as described above, the temperature of the glass ribbon is lowered as the glass ribbon flows downward, and the temperature of the glass ribbon is not increased while the glass ribbon is flowing downward. In contrast, in the present invention, the glass ribbon is reheated at the position immediately below the controlling portion. The wording "reheated" used herein means re-increasing the temperature of the glass ribbon to reduce the viscosity thereof. In accordance with the producing apparatus as described above, it is often the case that the glass ribbon is cooled by the controlling portion provided immediately below the forming member, and the cooled glass ribbon is reheated by the reheating portion provided immediately below the controlling portion to be brought into a softened state and re-extended downward. That is, the sheet thickness of the glass ribbon obtained by cooling it in a state where the widthwise contraction is controlled by the controlling portion can be further reduced with the reheating portion. Accordingly, the sheet thickness of the glass ribbon can be reduced in stages at the position immediately below the forming member and at the position immediately below the reheating portion, and hence the reduction in the sheet thickness of the glass ribbon can be properly achieved without inappropriately increasing the flow speed of the glass ribbon.

In this case, the controlling portion may be constructed of cooling rollers which rotate while holding therebetween both widthwise end portions of the glass ribbon.

With this arrangement, the cooling rollers play a role as supporting portion for supporting the glass ribbon in addition to a roll as the controlling portion for controlling the widthwise contraction of the glass ribbon, and hence the stabilization of the process step of forming the glass ribbon can be properly achieved.

In the producing apparatus, the reheating portion is preferably constructed to reheat the glass ribbon over an entire width of the glass ribbon.

With this structure, the glass ribbon can be softened over the entire width thereof by the reheating portion, and hence the reduction in the sheet thickness of the glass ribbon can be more properly achieved. In this case, the reheating portion is preferably constructed so as to be capable of adjusting the heating temperature along the width direction of the glass ribbon. With this structure, the softened state of the glass ribbon can be adjusted over the entire width, and hence a displacement amount in the direction of flow of the glass ribbon (vertical direction) caused by the reheating can be made constant over the entire width of the glass ribbon.

In the producing apparatus, guiding portion which has a gap with a dimension larger than the sheet thickness of the glass ribbon in a thickness direction of the glass ribbon, for performing guiding while controlling a warp or a displacement of the glass ribbon within a range of the gap, is preferably provided below the reheating portion.

In general, as the sheet thickness of the glass ribbon is smaller, a warp and a displacement (e.g., a swing) are more liable to occur to the glass ribbon. However, with this arrangement, even in the case of the occurrence of such a situation, the glass ribbon is guided in a state where the warp or the displacement is controlled with the gap of the guiding portion, and hence such a situation can be prevented that a part of the glass ribbon in the softened state is deformed due to the warp or the displacement, and solidified in the deformed state.

In the producing apparatus, the guiding portion is preferably constructed to guide only the both widthwise end portions of the glass ribbon.

With regard to the glass ribbon formed by the down-draw process, it is customary to remove the both widthwise end portions thereof as ear portions, and obtain the sheet glass as a product from the widthwise middle portion thereof. Accordingly, with this structure, only the both widthwise end portions of the glass ribbon which are removed as the ear portions are guided, and hence it becomes possible to suppress the warp and the displacement in the entire glass ribbon without impairing the grade of the surface of the widthwise middle portion from which the sheet glass is obtained.

In this case, the guiding portion is preferably constructed of guide rollers which rotate in a state in which the guide rollers are disposed in opposing relation at each of the both widthwise end portions of the glass ribbon via the gap with the dimension larger than the sheet thickness of the glass ribbon.

With this arrangement, even when the guiding portion, which is in contact with the surface of the glass ribbon, guides the glass ribbon, flaws caused by the contact become less likely to occur to the surface of the both widthwise end portions of the glass ribbon. Therefore, it becomes possible to form the glass ribbon with a thin sheet thickness with enhanced stability.

According to the present invention, as a first process invented in order to achieve the above-mentioned object, there is provided a process for producing a glass ribbon by feeding molten glass to a forming member and causing the molten glass to flow downward from the forming member to form a sheet-like glass ribbon, including a reheating step of reheating the glass ribbon caused to flow downward from the forming member, in which, by reheating the glass ribbon in the reheating step, a sheet thickness of the glass ribbon after the reheating is made smaller than the sheet thickness of the glass ribbon before the reheating.

In accordance with the producing process as described above, an operation/working-effect similar to that described in the paragraph [0011] can be obtained.

Further, according to the present invention, as a second process invented in order to achieve the above-mentioned object, there is provided a process for producing a glass ribbon by feeding molten glass to a forming member and causing the molten glass to flow downward from the forming member to form a sheet-like glass ribbon, including a reheating step of reheating and softening the glass ribbon which is temporarily cooled while being caused to flow downward from the forming member.

In accordance with the producing process as described above, an operation/working-effect similar to that described in the paragraph [0013] can be obtained.

Further, according to the present invention, as a third process invented in order to achieve the above-mentioned object, there is provided a process for producing a glass ribbon by feeding molten glass to a forming member and causing the molten glass to flow downward from the forming member to form a sheet-like glass ribbon, including: a controlling step of controlling a widthwise contraction of the glass ribbon immediately below the forming member; and a reheating step of reheating and softening, immediately after the controlling step, the glass ribbon in which the widthwise contraction is controlled in the controlling step.

In accordance with the producing process as described above, an operation/working-effect similar to that described in the paragraph [0015] can be obtained.

In the producing process, the glass ribbon is reheated over an entire width of the glass ribbon in the reheating step.

With this, an operation/working-effect similar to that described in the paragraph [0019] can be obtained.

In the producing process, the reheating of the glass ribbon in the reheating step is preferably performed at a temperature equal to or higher than a softening point of the glass ribbon. For example, for an alkali-free glass used as a display substrate for a liquid crystal display device or the like, the reheating is preferably performed at a temperature of 1,000°C or higher, especially preferable at a temperature in a range from 1,000°C to 1,300°C.

With this arrangement, a portion of the glass ribbon caused to flow downward from the forming member corresponding to a position for the reheating process step is heated to the softening point, and hence it becomes possible to perform the reduction in the thickness of the glass ribbon more efficiently.

In the producing process, the sheet thickness of a widthwise middle portion of the glass ribbon after forming is equal to or smaller than 1/2 of the sheet thickness of the widthwise middle portion of the glass ribbon before the reheating step. The wording "the glass ribbon after forming" means a glass ribbon in a state where the glass ribbon is sufficiently cooled and solidified to a degree that the thickness thereof is not reduced any more even when the glass ribbon is pulled downward (the same shall apply to the same wording shown below).

That is, in accordance with the producing process according to the present invention thus described, it becomes possible to properly respond to the requirement for a reduction in the thickness of the glass ribbon in recent years, and also to the requirement for a reduction in the thickness of a sheet glass cut from the glass ribbon.

In the producing process, the sheet thickness of the widthwise middle portion of the glass ribbon after the forming is equal to or smaller than 0.5 mm.

That is, in accordance with the producing process according to the present invention thus described, it is possible to appropriately produce an extremely thin sheet glass required recently in, e.g., a cover glass for a solid-state imaging element such as a CCD or a CMOS, and a glass substrate for various flat panel displays represented by a liquid crystal display.

Preferably, the producing process, further includes: a guiding step of causing the glass ribbon reheated in the reheating step to pass through a gap provided in guiding portion so as to have a dimension larger than the sheet thickness of the glass ribbon, and performing guiding while controlling a warp or a displacement of the glass ribbon within a range of the gap.

With this, an operation/working-effect similar to that described in the paragraph [0021] can be obtained.

In this case, the guiding portion preferably guides only both widthwise end portions of the glass ribbon in the guiding step.

With this, an operation/working-effect similar to that described in the paragraph [0023] can be obtained.

### ect of the Invention

As has been described, according to the present invention, by reheating the glass ribbon with the sheet thickness reduced to a certain degree at a position immediately below the forming member, the sheet thickness thereof can be further reduced. The sheet thickness of the glass ribbon can be reduced in stages at a position immediately below the forming member and immediately after the glass ribbon is reheated, and hence a reduction in the sheet thickness of the glass ribbon can be properly achieved without inappropriately increasing the flow speed of the glass ribbon.

### Brief Description of Drawings

FIG. 1 is a schematic longitudinal side view showing a glass ribbon producing apparatus according to an embodiment of the present invention; and
FIG. 2 is a schematic longitudinal front view showing the producing apparatus.

### Description of Symbols

- 1: producing apparatus
- 2: furnace
- 3: forming member
- 4: controlling portion
- 4a: cooling roller
- 5: reheating portion
- 5 a: heater
- 6: guiding portion
- 6a: guide roller
- Y: molten glass
- G: glass ribbon

### Best mode for carrying out the Invention

An embodiment of the present invention is described hereinbelow with reference to the accompanying drawings.

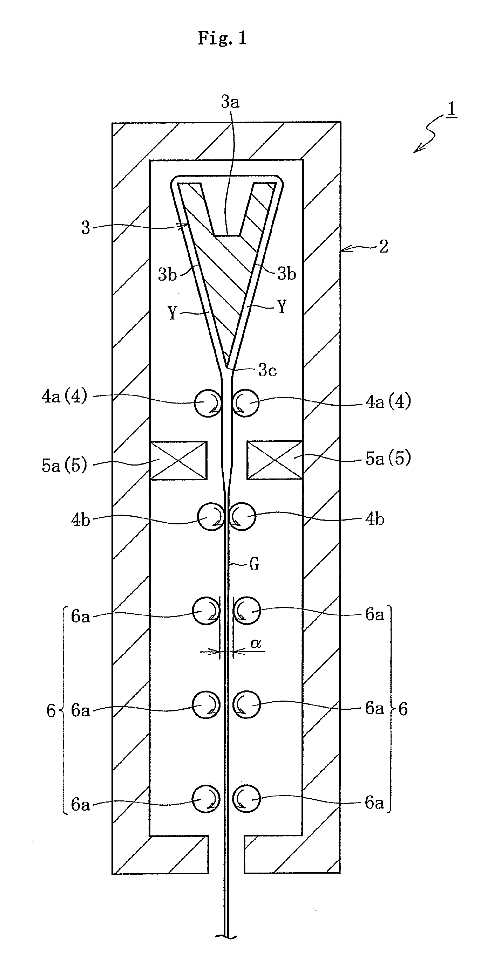

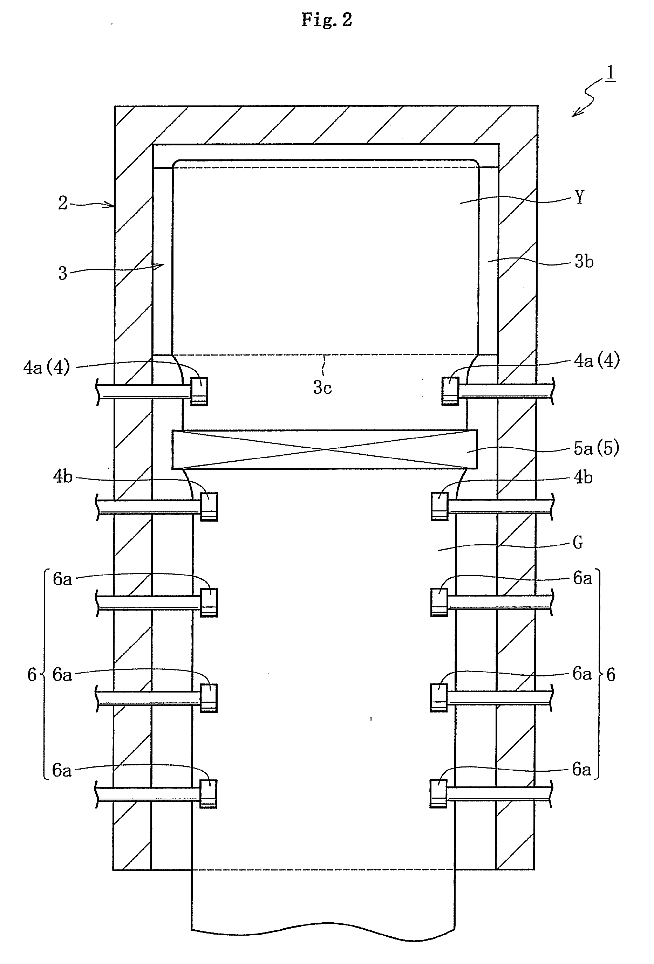

FIG. 1 is a schematic longitudinal side view schematically showing an internal state of a glass ribbon producing apparatus according to one embodiment of the present invention, while FIG. 2 is a schematic longitudinal front view schematically showing the internal state of the producing apparatus. As shown in the respective drawings, this producing apparatus 1 includes a forming member 3, controlling portion 4, reheating portion 5, and guiding portion 6 in order from above inside a furnace 2 made of refractory brick.

The forming member 3, which has a wedge-like cross-sectional configuration, and an overflow trough 3a at a top portion thereof, is adapted to cause molten glass Y fed to the overflow trough 3a to overflow from the top portion and cause the overflowing molten glass Y to flow downward along both side surfaces 3b of the forming member 3 so that the molten glass Y is fused at a lower end portion 3c of the forming member 3 to be made into a sheet-like configuration, and the molten glass Y in this configuration is caused to flow downward as a sheet-like glass ribbon G along a vertical direction.

The controlling portion 4 controls a widthwise thermal contraction of the glass ribbon G at a position immediately below the forming member 3, and is constructed of cooling rollers (edge rollers) 4a that are disposed so as to hold therebetween the glass ribbon G immediately after the molten glass Y caused to flow downward from the top portion of the forming member 3 along the both side surfaces 3b is fused at the lower end portion 3c of the forming member 3 to be formed into the configuration of a single sheet. In greater detail, the total of four cooling rollers 4a are provided in two pairs each disposed at each widthwise end portion of the glass ribbon G, and adapted to rotate at a rotation speed in synchronization with the flow speed of the glass ribbon G, while holding therebetween only the both widthwise end portions of the glass ribbon G.

The reheating portion 5 reheats and softens the glass ribbon G which is temporarily cooled while being caused to flow downward from the forming member 3, and is constructed of heaters 5a disposed in opposing relation at each of front and back surfaces of the glass ribbon G via space. In greater detail, as shown in FIG. 2, each of the heaters 5a is longer than the widthwise dimension of the glass ribbon G, and is adapted to reheat and soften the glass ribbon G over the entire width of the glass ribbon G. Although depiction is omitted, there is adopted a structure in which each of the heaters 5a is divided into a plurality of units along the width direction of the glass ribbon G, and the heating temperature can be individually controlled in the width direction such that the softened state of the glass ribbon G becomes substantially equal in the width direction. Note that, in this embodiment, similarly to the above-mentioned cooling rollers 4a disposed immediately below the forming member 3, cooling rollers 4b as controlling portion for controlling the widthwise thermal contraction of the glass ribbon G reheated by the heaters 5a are also disposed immediately below the heaters 5a. The cooling rollers 4b have a structure similar to that of the cooling rollers 4a described above, and are adapted to rotate while holding therebetween the both widthwise end portions of the reheated glass ribbon G.

The guiding portion 6 has a gap with a dimension larger than the sheet thickness of the glass ribbon G in a thickness direction of the glass ribbon G, controls the warp or the displacement of the glass ribbon G within the range of the gap and performs guiding. Although the guiding portion 6 may be constructed of, e.g., sheet-like members which are spaced apart by the dimension of the gap larger than the sheet thickness of the glass ribbon G from each other and disposed in opposing relation, in this embodiment, the guiding portion 6 is constructed of guide rollers 6a which rotate in a state in which the guide rollers 6a are disposed in opposing relation at each of the both widthwise end portions of the glass ribbon G via a gap with a dimension larger than the sheet thickness (sheet thickness of each of the both widthwise end portions) of the glass ribbon G. An opposing interval α between the guide rollers 6a opposing to each other in the thickness direction of the glass ribbon G is preferably set to 10 mm or less, especially 5 mm or less. Note that the lower limit value of the opposing interval α is appropriately adjusted depending on the sheet thickness of each of the both widthwise end portions of the glass ribbon G and the like, and is preferably, for example, 0.2 mm or more, especially 1 mm or more. The guide rollers 6a, which are four in total and provided in two pairs each disposed at each of the widthwise end portions of the glass ribbon G, are disposed at one or a plurality of locations on a transport route (three locations in a vertical direction in the drawing) when viewed in a direction of transporting the glass ribbon G. Each of the guide rollers 6a is adapted to rotate at a rotation speed in response to the flow speed of the glass ribbon G. When the guide rollers 6a are disposed at the plurality of locations in the direction of transporting the glass ribbon G, the lowermost guide rollers 6a may be used as pull rollers for pulling out the glass ribbon G downward while holding therebetween the glass ribbon G by narrowing the opposing interval α thereof as needed.

According to the producing apparatus 1 having the structure thus described, the glass ribbon G is produced in a manner as follows.

First, the glass ribbon G immediately after being caused to flow downward from the lower end portion 3c of the forming member 3 is extended downward while the widthwise contraction thereof is controlled by the cooling rollers 4a, and the thickness thereof is reduced to a certain thickness (hereinafter, referred to as initial thickness). That is, the glass ribbon G is cooled by the cooling rollers 4a and the atmosphere in the furnace 2 to be brought close to a solidified state, and a substantial change in the sheet thickness does not occur any more in a stage in which the glass ribbon G reaches the initial thickness described above. Subsequently, the glass ribbon G, which has been temporarily cooled and has reached the initial thickness, is softened by the reheating of the heaters 5a. Thus, by reheating the glass ribbon G, the glass ribbon G that has been temporarily cooled is re-extended downward, and the sheet thickness of the glass ribbon G is made smaller than the initial thickness described above. Specifically, the sheet thickness of the widthwise middle portion of the glass ribbon G that is reheated by the heaters 5a is finally reduced to, e.g., 1/2 or less of the initial thickness of the widthwise middle portion.

With this arrangement, the sheet thickness of the glass ribbon is reduced in stages at a position immediately below the forming member 3 and at a position immediately below the heaters 5a, and hence the reduction in the sheet thickness of the glass ribbon G can be properly achieved without inappropriately increasing the flow speed of the glass ribbon G. The reheating by the heaters 5a is performed over the entire width of the glass ribbon G at a temperature not less than the softening point of the glass ribbon G (e.g., 1,000 to 1,300°C), and the adjustment of the heating temperature is performed in the width direction such that the softened state of the glass ribbon G becomes uniform in the width direction. Accordingly, because the reheating by the heaters 5a reduces the possibility of occurrence of variations in the displacement amount in the direction of transporting the glass ribbon G, it becomes possible to accurately perform the reduction in the sheet thickness of the glass ribbon G.

In addition, by thus reheating the glass ribbon G, the glass ribbon G with the sheet thickness of 0.5 mm or less and, further, the glass ribbon G with the sheet thickness of 0.2 mm or less can be easily produced. Such a glass ribbon G with an extremely thin sheet thickness can be suitably used as a cover glass for a solid-state imaging device such as a CCD or a CMOS, and a glass substrate for various flat panel displays represented by a liquid crystal display.

Moreover, the glass ribbon G with the sheet thickness reduced by the reheating of the heaters 5a is guided downward through the gap between the guide rollers 6a which are disposed in opposing relation via the gap with the dimension larger than the sheet thickness of each of the both widthwise end portions of the glass ribbon G. In general, as the sheet thickness of the glass ribbon G becomes smaller, the warp or the displacement caused by the swing or the like becomes more liable to occur to the glass ribbon G caused to flow downward from the lower end portion 3c of the forming member 3. However, with the lower portion of the glass ribbon G passing through the gap between the guide rollers 6a, it follows that the glass ribbon G is guided while the warp and the displacement are controlled within the range of the gap. Therefore, because such a situation is prevented that a part of the glass ribbon G in the softened state immediately below the forming member 3, immediately below the heaters 5a, or the like is solidified in a state in which the part of the glass ribbon G is affected by the warp or the displacement, it becomes possible to produce the glass ribbon G excellent in flatness. Note that each of the guide rollers 6a rotates at the rotation speed in response to the flow speed of the glass ribbon G, and hence even when the glass ribbon G comes into contact with the guide rollers 6a, it follows that the glass ribbon G is smoothly guided downward.

The cooling rollers 4a and 4b, and the guide rollers 6a come into contact with only the both widthwise end portions of the glass ribbon G, and do not come into contact with the widthwise middle portion on the transport route for the glass ribbon G caused to flow downward from the lower end portion 3c of the forming member 3, and hence it follows that high surface grade can be maintained in the widthwise middle portion of the glass ribbon G. When a sheet glass is obtained from the finally solidified glass ribbon G, because it is customary to remove the both widthwise end portions of the glass ribbon G as ear portions, and obtain the sheet glass from the widthwise middle portion, a sheet glass as a thin sheet having high surface grade (e.g., a sheet glass with the sheet thickness of 0.5 mm or less) can be produced. By disposing, as the controlling portion, the cooling rollers 4a and 4b immediately below the forming member 3 and immediately below the heaters 5a, the contraction of the widthwise dimension of the glass ribbon G can be controlled. Consequently, the reduction in the sheet thickness of the glass ribbon G can be achieved while a large widthwise dimension of the widthwise middle portion of the glass ribbon G from which the sheet glass is obtained is secured.

Note that, in the embodiment described above, the structure in which the reheating portion is disposed at one location on the transport route for the glass ribbon has been described. However, a plurality of the reheating portion may be disposed as needed at intervals in a vertical direction on the transport route for the glass ribbon extending from the controlling portion disposed immediately below the forming member to the guiding portion.

In addition, in the embodiment described above, the present invention has been applied to the glass ribbon formed by the overflow down-draw process. However, other than the overflow down-draw process, the present invention can be similarly applied to the glass ribbon formed by, e.g., the slot down-draw process.

## Claims

1. A process for producing a glass ribbon (G) by feeding molten glass (Y) to a forming member (3) and causing the molten glass (Y) to flow downward from the forming member (3) to form a sheet-like glass ribbon (G), comprising
a reheating step of reheating and softening the glass ribbon (G) to further reduce the thickness of the glass ribbon (G),
after the glass ribbon (G) was temporarily cooled while being caused to flow downward from the forming member (3), whereby the glass ribbon (G) does not substantially vary in thickness.

2. A process for producing a glass ribbon (G) by feeding molten glass (Y) to a forming member (3) and causing the molten glass (Y) to flow downward from the forming member (3) to form a sheet-like glass ribbon, comprising a reheating step of reheating the glass ribbon (G) caused to flow downward from the forming member (3),
wherein, by reheating the glass ribbon in the reheating step, a viscosity of the glass ribbon after the reheating is made lower than the viscosity of the glass ribbon before the reheating.

3. A process for producing a glass ribbon (G) by feeding molten glass (Y) to a forming member (3) and causing the molten glass (Y) to flow downward from the forming member (3) to form a sheet-like glass ribbon, comprising a reheating step of reheating the glass ribbon (G) caused to flow downward from the forming member (3),
wherein, by reheating the glass ribbon in the reheating step, a temperature of the glass ribbon after the reheating is made higher than the temperature of the glass ribbon before the reheating.

4. A process for producing a glass ribbon (G) according to any one of claims 1 to 3, wherein the glass ribbon (G) is reheated over an entire width of the glass ribbon (G) in the reheating step.

5. A process for producing a glass ribbon according (G) to any one of claims 1 to 4, wherein the reheating of the glass ribbon (G) in the reheating step is performed at a temperature equal to or higher than a softening point of the glass ribbon (G).

6. A process for producing a glass ribbon (G) according to any one of claims 1 to 5, wherein the sheet thickness of a widthwise middle portion of the glass ribbon (G) after forming is equal to or smaller than 1/2 of the sheet thickness of the widthwise middle portion of the glass ribbon (G) before the reheating step.

7. A process for producing a glass ribbon (G) according to any one of claims 1 to 6, wherein the sheet thickness of the widthwise middle portion of the glass ribbon (G) after the forming is equal to or smaller than 0.5 mm.

8. A process for producing a glass ribbon (G) according to any one of claims 1 to 7, further comprising a guiding step of causing the glass ribbon (G) reheated in the reheating step to pass through a gap provided in a guiding portion (6) so as to have a dimension larger than the sheet thickness of the glass ribbon (G), and performing guiding while controlling a warp or a displacement of the glass ribbon (G) within a range of the gap.

9. A process for producing a glass ribbon (G) according to claim 8, wherein the guiding portion (6) guides only both widthwise end portions of the glass ribbon (G) in the guiding step.
